# EUROPÄISCHE PATENTSCHRIFT

(11) **EP 4 405 795 B1**
(45) Veröffentlichungstag und Bekanntmachung des Hinweises auf die Patenterteilung: **20.08.2025**
(21) Anmeldenummer: 22777993.1
(22) Anmeldetag: 22.09.2022
(51) Int. Cl.: G06F 3/041, B60K 35/00, B60K 35/10, B60K 35/90, G06F 3/042

(54) **KALIBRIERUNG EINER BENUTZEREINGABEVORRICHTUNG UND DETEKTION EINER BETÄTIGUNG EINER BENUTZEREINGABEVORRICHTUNG EINES KRAFTFAHRZEUGS**
CALIBRATION OF A USER INPUT APPARATUS AND DETECTION OF ACTUATION OF A USER INPUT APPARATUS OF A MOTOR VEHICLE
ÉTALONNAGE D'UN DISPOSITIF D'ENTRÉE UTILISATEUR ET DÉTECTION D'UN ACTIONNEMENT D'UN DISPOSITIF D'ENTRÉE UTILISATEUR D'UN VÉHICULE AUTOMOBILE

(30) Priorität: 24.09.2021 DE 102021124731
(43) Veröffentlichungstag der Anmeldung: 31.07.2024
(73) Patentinhaber: Valeo Schalter und Sensoren GmbH, 74321 Bietigheim-Bissingen (DE)
(72) Erfinder: SCHMITT, Martin, 96476 Bad Rodach (DE); STURM, Raphael, 96476 Bad Rodach (DE)
(74) Vertreter: Ralf, Thorge
(86) Internationale Anmeldenummer: PCT/EP2022/076322
(87) Internationale Veröffentlichungsnummer: WO 2023/046816

(56) Entgegenhaltungen:
- DE-A1- 102019 204 058
- FR-A1- 3 056 860
- US-A1- 2014 168 153
- US-A1- 2015 338 303
- US-A1- 2017 242 505
- US-A1- 2017 242 539

## Beschreibung

Die vorliegende Erfindung betrifft ein Verfahren zur Kalibrierung einer Benutzereingabevorrichtung für ein Kraftfahrzeug, ein Verfahren zur Detektion einer Betätigung einer Benutzereingabevorrichtung eines Kraftfahrzeugs, eine Benutzereingabevorrichtung für ein Kraftfahrzeug sowie ein Kraftfahrzeug mit einer solchen Benutzereingabevorrichtung.

Im Fahrzeuginnenraum von Kraftfahrzeugen werden klassische Bediengeräte zum Teil durch sogenannte smarte Oberflächen ersetzt. Hierbei verschmelzen Design, Umgebungsbeleuchtung und Bedienfunktionalität. Insbesondere können dabei Blenden oder sonstige Oberflächen im Fahrzeuginnenraum mit berührungsempfindlichen Oberflächen ausgestattet sein, die eine Berührung oder eine Wischgeste oder dergleichen des Benutzers detektieren kann. Eine Herausforderung die sich dabei stellt ist, zwischen einer beabsichtigten Betätigung der Benutzereingabevorrichtung durch den Benutzer und einer versehentlichen Berührung der berührungsempfindlichen Oberfläche zu unterscheiden.

Eine Möglichkeit dem zu begegnen ist es, die Betätigungskraft, die der Benutzer auf die berührungsempfindliche Oberfläche ausübt, mit einer entsprechend verbauten Sensorik zu detektieren und mit einem Schwellwert zu vergleichen. Ist die Betätigungskraft groß genug, kann von einer beabsichtigten Betätigung ausgegangen werden, anderenfalls von einer unbeabsichtigten Berührung.

Toleranzen, Material- Prozessschwankungen bei der Herstellung der Benutzereingabevorrichtung, ebenso wie zusätzliche mechanische Spannungen oder Belastungen der bei der Montage der Benutzereingabevorrichtung in dem Kraftfahrzeug, können im final montierten Produkt dazu führen, dass ein und dieselbe Betätigungskraft zu unterschiedlichen Messwerten der Sensorik führt und daher gegebenenfalls zu falschpositiven oder falsch-negativen Detektionen einer Betätigung.

Die DE 10 2019 204 058 A1 offenbart eine Kraftmessvorrichtung zur Ermittlung einer auf ein bewegliches Oberflächenelement einer Fahrzeugkomponente ausgeübten Kraft. Die Kraftmessvorrichtung umfasst eine Feder, die eine Vorspannung zwischen dem beweglichen Oberflächenelement und einem Gehäuseelement der Fahrzeugkomponente ausübt. Ferner umfasst die Kraftmessvorrichtung einen berührungslos messenden Abstandsensor zur Erfassung des Abstands zwischen dem Oberflächenelement und dem Gehäuseelement).

Die US 2017/242539 A1 offenbart ein Verarbeitungssystem für ein Eingabegerät, wobei das Verarbeitungssystem eine Sensorschaltung umfasst, die kommunikativ an eine Vielzahl von Positionssensorelektroden und eine Vielzahl von Kraftsensorelektroden gekoppelt ist, und ein Sensormodul mit Schaltung. Das Sensormodul ist so konfiguriert, dass es eine Vielzahl von Kapazitätsänderungen von der Vielzahl der Kraftsensorelektroden erfasst, die als Reaktion auf eine Ablenkung der Sensorelektroden durch eine Eingangskraft auftritt.

Die US 2017/242505 A1 offenbart ein Verarbeitungssystem, welches Sensorschaltungen und Verarbeitungsschaltungen umfasst. Die Sensorschaltung ist so konfiguriert, dass sie mit Kraftsensorelektroden gekoppelt werden kann, und ist so konfiguriert, dass sie die Kraftsensorelektroden antreibt, um kapazitive Messungen zu erhalten. Die Verarbeitungsschaltung ist operativ mit der Sensorschaltung verbunden und so konfiguriert, dass sie die kapazitiven Messungen zu einer aggregierten Messung aggregiert und auf die aggregierte Messung eine kapazitive Messung zur Temperaturabbildung anwendet, um eine aktuelle Temperatur der Kraftsensorelektroden zu erhalten.

Die US 2014/168153 A1 offenbart Touchscreen-Systeme und -Verfahren, die auf der Berührungsposition und der Berührungskraft basieren. Das Touchscreen-System umfasst ein optisches Kraftmesssystem, das mit einem kapazitiven Berührungssensorsystem verbunden ist, so dass sowohl die Berührungsposition als auch die Berührungskraftinformationen abgerufen werden können.

Die US 2015/338303 A1 offenbart ein Verfahren und eine Vorrichtung zum Kalibrieren eines kraftmessenden Touchscreen-Panels, welches das Bestimmen von Kalibrierungsfaktoren für die Positionserfassungsschichten des Touchscreen-Panels und das Anwenden dieser Kalibrierungsfaktoren zum Einstellen von Nennwiderstandswerten für Widerstandskomponenten der Positionserfassungsschichtenumfasst, wenn Kraft auf das Touchscreen-Panel ausgeübt wird.

Es ist eine Aufgabe der vorliegenden Erfindung, die Zuverlässigkeit bei der Detektion der Betätigung einer Benutzereingabevorrichtung mit einer berührungsempfindlichen Oberfläche zu erhöhen.

Diese Aufgabe wird gelöst durch den Gegenstand des unabhängigen Anspruchs. Vorteilhafte Weiterbildungen und bevorzugte Ausführungsformen sind Gegenstand des nebengeordneten Anspruchs und der abhängigen Ansprüche.

Die Erfindung beruht auf der Idee, eine zweistufige Kalibrierung der Benutzerbedienungsvorrichtung durchzuführen. In einem ersten Kalibrierungsschritt wird dabei ein Abstandssensor dahingehend kalibriert, dass ein Zusammenhang der Änderung der Betätigungskraft mit der Änderung des entsprechenden Sensorsignals bestimmt wird, bevor die Benutzerbedienvorrichtung in dem Kraftfahrzeug montiert wird. Nach der Montage in dem Kraftfahrzeug wird ein zweiter Kalibrierungsschritt durchgeführt, in dem ein Istwert, insbesondere ein Absolutwert, des Sensorsignals bestimmt wird und der im ersten Kalibrierungsschritt bestimmte Zusammenhang abhängig von dem nach der Montage bestimmten Istwert korrigiert wird, wobei der Istwert im zweiten Kalibrierungsschritt insbesondere erfasst wird, während keine Betätigungskraft ausgeübt wird.

Gemäß einem Aspekt der Erfindung wird ein Verfahren zur Kalibrierung einer Benutzereingabevorrichtung für ein Kraftfahrzeug angegeben.

Die Benutzereingabevorrichtung weist dabei eine Komponente mit einer berührungsempfindlichen Oberfläche auf sowie ein mit der Komponente mechanisch, insbesondere starr, verbundenes Referenzelement. Die Benutzereingabevorrichtung weist einen Schaltungsträger auf sowie einen Abstandssensor, der auf dem Schaltungsträger angeordnet ist und dazu eingerichtet ist, abhängig von einem Abstand des Referenzelements von dem Abstandssensor ein Sensorsignal zu erzeugen. Die Benutzereingabevorrichtung weist außerdem eine Auswerteeinheit auf, die dazu eingerichtet ist, eine Betätigung der Benutzereingabevorrichtung zu detektieren, insbesondere nur dann zu detektieren beziehungsweise genau dann zu detektieren, wenn die berührungsempfindliche Oberfläche durch einen Benutzer berührt wird und gleichzeitig eine Betätigungskraft auf die berührungsempfindliche Oberfläche ausgeübt wird, die größer oder gleich einer vorgebbaren Minimalkraft ist.

Das erfindungsgemäße Verfahren weist einen ersten Kalibrierungsschritt auf, einen Montageschritt, der auf den ersten Kalibrierungsschritt folgt, also nach der Durchführung des ersten Kalibrierungsschritts durchgeführt wird, sowie einen zweiten Kalibrierungsschritt, der auf den zweiten Montageschritt folgt, also nach der Durchführung des Montageschritts durchgeführt wird. In dem ersten Kalibrierungsschritt vor der Montage wird ein erster Zusammenhang zwischen einer Änderung der Betätigungskraft und einer Änderung des Sensorsignals, insbesondere des Werts beziehungsweise des Absolutwerts, des Sensorsignals bestimmt. In dem Montageschritt nach der Durchführung des ersten Kalibrierungsschritts wird die Benutzereingabevorrichtung in dem Kraftfahrzeug verbaut, also insbesondere mechanisch mit dem Kraftfahrzeug verbunden. In dem zweiten Kalibrierungsschritt nach Durchführung des Montageschritts wird ein erster Istwert des Sensorsignals bestimmt und der erste Zusammenhang wird abhängig von dem ersten Istwert korrigiert.

Die Auswerteeinheit ist insbesondere elektrisch mit der berührungsempfindlichen Oberfläche verbunden, um die Berührung der berührungsempfindlichen Oberfläche durch den Benutzer detektieren zu können. Die berührungsempfindliche Oberfläche kann beispielsweise als sogenannter Touchscreen oder als Touchbedienfeld ausgestaltet sein. Die berührungsempfindliche Oberfläche kann dabei gemäß einem bekannten Funktionsprinzip zur Umsetzung der Berührungsempfindlichkeit ausgebildet sein. Beispielsweise kann die berührungsempfindliche Oberfläche gemäß einem resistiven Funktionsprinzip, einem kapazitiven Funktionsprinzip oder einem induktiven Funktionsprinzip und so weiter ausgestaltet sein. Zur Detektion der Berührung der berührungsempfindlichen Oberfläche ist also insbesondere keine oder im Wesentlichen keine Ausübung einer Kraft auf die berührungsempfindliche Oberfläche erforderlich.

Die Komponente mit der berührungsempfindlichen Oberfläche kann beispielsweise als Blende oder Blendenkomponente, insbesondere als Blende zur Einbindung in ein Cockpit des Kraftfahrzeugs, beispielsweise in ein Armaturenbrett des Kraftfahrzeugs, ausgestaltet sein. Insbesondere ist die Komponente flexibel, sodass sich der Abstand zwischen der Komponente und dem Abstandssensor und somit zwischen dem Referenzelement und dem Abstandssensor durch Ausübung der Betätigungskraft verändern kann. Beispielsweise kann die Komponente als Platte, beispielsweise bestehend aus oder aufweisend eines oder mehrere Kunststoffmaterialien, ausgestaltet sein. Unter einer Platte kann dabei eine Komponente verstanden werden, deren Ausdehnung in zwei Raumdimensionen wesentlich größer ist als in der dritten Raumdimension, beispielsweise mindestens um einen multiplikativen Faktor 10, vorzugsweise mindestens 20, mindestens 50 oder mindestens 100. Mit anderen Worten sind die Länge und die Breite der Platte wesentlich größer als die Dicke der Platte. Die Platte kann dabei im Wesentlichen eben sein oder gekrümmt, insbesondere im kraftfreien Zustand, das heißt wenn keine Betätigungskraft auf die berührungsempfindliche Oberfläche ausgeübt wird.

Vom Benutzer aus gesehen ist der Schaltungsträger daher nach der bestimmungsgemäßen Montage der Benutzereingabevorrichtung in dem Kraftfahrzeug hinter der Komponente, insbesondere hinter der Blende, angeordnet und daher nicht sichtbar. Entsprechendes gilt für den Abstandssensor und das Referenzelement. Drückt der Benutzer zur Betätigung der Benutzereingabevorrichtung auf die berührungsempfindliche Oberfläche, so berührt er diese und übt er im Allgemeinen gleichzeitig eine Betätigungskraft aus. Je nach Größe der vorgebbaren oder vorgegebenen Minimalkraft kann die Auswerteeinheit dann eine Betätigung detektieren beziehungsweise nur dann detektieren, wenn die Betätigungskraft während der Berührung der berührungsempfindlichen Oberfläche größer oder gleich einem entsprechenden Wert ist. Dies kann durch Vergleich des Sensorsignals mit einem zugehörigen Schwellwert erfolgen. Der Schwellwert kann dabei insbesondere aus dem korrigierten Zusammenhang abgeleitet werden.

Das Referenzelement kann in dem Sinne als Referenzelement verstanden werden, als dass es zur Messung des Abstands dient und dabei repräsentativ für den Abstand beziehungsweise die Abstandsänderung zwischen Komponente und Schaltungsträger oder Abstandssensor durch die Betätigungskraft steht. Durch die mechanische Verbindung des Referenzelements mit der Komponente wird eine auf die berührungsempfindliche Oberfläche und damit die Komponente ausgeübte Betätigungskraft, mehr oder weniger unmittelbar, auf das Referenzelement übertragen, sodass sich der Abstand zwischen dem Referenzelement und dem Abstandssensor ändert. Der Abstand zwischen dem Referenzelement und dem Abstandssensor ist daher repräsentativ für eine Änderung der Position der Komponente oder Blende, beispielsweise durch Durchbiegen oder dergleichen aufgrund der Betätigungskraft.

Die Komponente, insbesondere die Blende, kann beispielsweise mittels eines Spritzgussverfahrens hergestellt werden und kann beispielsweise einen Kunststoff beinhalten oder daraus bestehen, beispielsweise Polycarbonat und/oder Polyurethan. Nach dem Spritzgussprozess kann auch eine Temperaturbehandlung, insbesondere ein Tempern, der Komponente erfolgen.

Die Komponente und das Referenzelement können unabhängig voneinander hergestellt werden und nach der Herstellung miteinander verbunden werden, beispielsweise verklebt, verschraubt oder verklemmt und so weiter. Beispielsweise kann das Referenzelement als Stößel ausgebildet und/oder an einer der berührungsempfindlichen Oberfläche abgewandten Seite der Komponente und damit an der dem Abstandssensor zugewandten Seite der Komponente angeordnet sein. In alternativen Ausführungsformen kann das Referenzelement auch Teil der Komponente sein oder einstückig mit der Komponente ausgebildet sein. Insbesondere kann das Referenzelement einem dem Abstandssensor gegenüberliegenden Bereich der Komponente beziehungsweise der Platte entsprechen. In solchen Ausführungsformen entspricht der Abstand zwischen dem Referenzelement und dem Abstandssensor direkt dem Abstand der Komponente zu dem Abstandssensor.

Das Verbauen der Benutzereingabevorrichtung in dem Kraftfahrzeug beinhaltet insbesondere die mechanische Befestigung der Benutzereingabevorrichtung, insbesondere der Komponente mit der berührungsempfindlichen Oberfläche, mit einem Teil oder einer weiteren Komponente des Kraftfahrzeugs. Insbesondere kann auch der Schaltungsträger mechanisch mit einem Teil des Kraftfahrzeugs verbunden werden. Beispielsweise können die Verbindungen durch Schraubverbindungen und/oder Klemmverbindungen und/oder Nietverbindungen und so weiter erfolgen.

Durch die Herstellung der Komponente, entsprechende Maßtoleranzen, Krümmungen, innere Spannungen und so weiter ebenso wie durch die mechanische Verbindung der Komponente mit sonstigen Teilen der Benutzereingabevorrichtung, insbesondere dem Schaltungsträger und so weiter, kann eine Betätigung durch einen Benutzer mit einer vorgegebenen Kraft an einer vorgegebenen Position je nach Benutzereingabevorrichtung in einer anderen Abstandsänderung resultieren, insbesondere in einem anderen Durchbiegeweg der Komponente oder Blende.

Durch die Montage der Benutzereingabevorrichtung mit dem Kraftfahrzeug können weitere Verbiegungen und/oder Verspannungen der Komponente und/oder des Schaltungsträgers resultieren, die zu weiteren Abweichungen im Verformungsweg und dementsprechend im gemessenen Abstand beziehungsweise der gemessenen Abstandsänderung resultieren.

Der korrigierte Zusammenhang kann als Ergebnis des Verfahrens zur Kalibrierung angesehen werden. Der korrigierte Zusammenhang ordnet jedem Wert, insbesondere jedem betrachteten Istwert des Sensorsignals einen Wert für die Betätigungskraft zu.

Damit kann die Auswerteeinheit direkt das Sensorsignal mit einem Schwellwert vergleichen, der gemäß dem korrigierten Zusammenhang einer vorgegebenen Minimalkraft entspricht. Die Auswerteeinheit kann daher basierend auf dem Vergleich des Sensorsignals mit dem entsprechenden Schwellwert entscheiden, ob eine Betätigung anzunehmen ist, da eine ausreichend starke Kraft ausgeübt wird, oder nicht.

Mit anderen Worten stellt das erfindungsgemäße Kalibrierungsverfahren sicher, dass der Schwellwert, mit dem die Auswerteeinheit den Istwert des Sensorsignals vergleicht, um die Betätigung zu verifizieren, auch tatsächlich der vorgegebenen Minimalkraft entspricht. Anders ausgedrückt liefert der korrigierte Zusammenhang den korrekten Schwellwert für die vorgegebene Minimalkraft.

Der erste Kalibrierungsschritt kann mittels der Auswerteeinheit und/oder mittels einer externen Recheneinheit, die mit der Auswerteeinheit verbunden ist, durchgeführt werden. Der zweite Kalibrierungsschritt wird vorzugsweise mittels der Auswerteeinheit durchgeführt. Der zweite Kalibrierungsschritt kann dabei insbesondere automatisch von der Auswerteeinheit durchgeführt werden, insbesondere ohne dass dazu eine entsprechende Interaktion mit einem Benutzer erforderlich ist. Der zweite Kalibrierungsschritt kann dabei vorteilhafterweise zu unterschiedlichen Zeitpunkten wiederholt werden, um gegebenenfalls sich verändernden Verhältnissen im Laufe des Betriebs des Kraftfahrzeugs Rechnung zu tragen. Alternativ kann der zweite Kalibrierungsschritt auch abhängig von einer entsprechenden Benutzereingabe durchgeführt werden.

Der zweite Kalibrierungsschritt wird insbesondere durchgeführt, während keine Betätigungskraft auf die berührungsempfindliche Oberfläche ausgeübt wird. Mit anderen Worten ist die Betätigungskraft, die während der Bestimmung des ersten Istwerts im zweiten Kalibrierungsschritt auf die berührungsempfindliche Oberfläche ausgeübt wird, gleich 0 N. Dies erleichtert die Automatisierbarkeit und automatische Wiederholung des zweiten Kalibrierungsschritts.

Durch das erfindungsgemäße Verfahren kann also die Zuverlässigkeit bei der Detektion der Betätigung der Benutzereingabevorrichtung durch den Benutzer erhöht werden, indem die individuellen teileabhängigen Schwankungen, Verspannungen oder Vorspannungen, die bei der Herstellung der Komponente, der Herstellung der Benutzereingabevorrichtung sowie der Montage der Benutzereingabevorrichtung in dem Kraftfahrzeug auftreten, berücksichtigt und durch die Kombination der beiden Kalibrierungsschritte kompensiert werden.

Um den ersten Zusammenhang im ersten Kalibrierungsschritt zu bestimmen, können unterschiedliche Betätigungskräfte beziehungsweise Veränderungen der Betätigungskraft auf die berührungsempfindliche Oberfläche ausgeübt werden und die zugehörige Änderung des Sensorsignals gemessen werden. Der Zusammenhang kann also als Wertezusammenhang oder Kurve für unterschiedliche Änderungen der Betätigungskraft und daraus resultierende unterschiedliche Änderungen des Sensorsignals aufgefasst werden.

Der erste Zusammenhang kann näherungsweise ein linearer Zusammenhang sein. Nimmt man einen linearen ersten Zusammenhang an, so kann das Bestimmen des ersten Zusammenhangs beispielsweise das Bestimmen einer entsprechenden Steigung des ersten Zusammenhangs beinhalten oder daraus bestehen.

Der Abstandssensor kann beispielsweise als optischer Abstandssensor ausgestaltet sein, insbesondere als aktives optisches Sensorsystem.

Um einen Abstand zu bestimmen beziehungsweise um ein entsprechendes Sensorsignal zu erzeugen, kann der Abstandssensor mittels einer Emittereinheit des Abstandssensors Licht in Richtung des Referenzelements emittieren und mittels einer Detektoreinheit des Abstandssensors von dem Referenzelement reflektierte Anteile des Lichts erfassen. Die Detektoreinheit beinhaltet dabei einen oder mehrere optische Detektoren, beispielsweise Photodioden. Die Emittereinheit beinhaltet eine oder mehrere Lichtquellen, beispielsweise Leuchtdioden oder Laserdioden. Das Licht kann beispielsweise infrarotem Licht entsprechen. Das Sensorsignal kann beispielsweise abhängig von einer Intensität der erfassten reflektierten Anteile erzeugt werden. Beispielsweise kann das Sensorsignal proportional zur erfassten Intensität der reflektierten Anteile sein.

Je geringer der Abstand zwischen Referenzelement und Abstandssensor ist, desto größer ist im Allgemeinen die Intensität der reflektierten Anteile des Lichts, sodass über die Intensität auf den Abstand geschlossen werden kann. In weiteren Ausführungsformen kann die Auswerteeinheit basierend auf den erfassten Anteilen des Lichts auch eine Lichtlaufzeitmessung durchführen oder eine Phasenvergleichsmessung zwischen emittierten und reflektierten Anteilen des Lichts. Basierend darauf kann dann das Sensorsignal erzeugt werden, das den Abstand repräsentiert.

Gemäß zumindest einer Ausführungsform des erfindungsgemäßen Verfahrens zur Kalibrierung einer Benutzereingabevorrichtung wird der erste Istwert des Sensorsignals bestimmt, während keine Betätigungskraft auf die berührungsempfindliche Oberfläche ausgeübt wird.

Erfindungsgemäß wird in dem ersten Kalibrierungsschritt eine erste Betätigungskraft mit einem von Null verschiedenen ersten Kraftwert auf die berührungsempfindliche Oberfläche ausgeübt und ein erster Wert des Sensorsignals wird während der Ausübung der ersten Betätigungskraft bestimmt. In einer Vielzahl von Iterationen, also insbesondere in drei oder mehr Iterationen, wird jeweils eine zweite Betätigungskraft mit einem von Null jeweils verschiedenen zweiten Kraftwert auf die berührungsempfindliche Oberfläche ausgeübt und jeweils ein zweiter Wert des Sensorsignals wird während der Ausübung der zweiten Betätigungskraft bestimmt. Für jede der Vielzahl von Iterationen wird die Änderung des Sensorsignals als Differenz zwischen dem ersten Wert des Sensorsignals und dem jeweiligen zweiten Wert des Sensorsignals bestimmt, um den ersten Zusammenhang in dem ersten Kalibrierungsschritt zu bestimmen.

Gemäß zumindest einer Ausführungsform wird zum Bestimmen des ersten Istwerts des Sensorsignals mittels der Emittereinheit des Abstandssensors Licht in Richtung des Referenzelements emittiert und mittels der Detektoreinheit des Abstandssensors werden von dem Referenzelement reflektierte Anteile des Lichts erfasst.

Gemäß zumindest einer Ausführungsform wird zum Korrigieren des ersten Zusammenhangs ein Korrekturfaktor abhängig von dem ersten Istwert des Sensorsignals bestimmt und der erste Zusammenhang wird mit dem Korrekturfaktor multipliziert.

Um den ersten Zusammenhang mit dem Korrekturfaktor zu multiplizieren, wird insbesondere für jede Änderung der Betätigungskraft der entsprechende bestimmte Wert der Änderung der Betätigungskraft mit dem Korrekturfaktor multipliziert.

Mit anderen Worten kann der erste Zusammenhand als DS = DS(DF) = f(DF) ausgedrückt werden, wobei DS die Änderung des Sensorsignals bezeichnet und DF die Änderung der Betätigungskraft. f ist eine Funktion, die den ersten Zusammenhand spezifiziert. Ist der erste Zusammenhang beispielswese näherungsweise linear, so ist f(DF) = m*DF + f(0).

Der korrigierte erste Zusammenhang ist dann beispielsweise gegeben durch DS(DF) = g(DF), wobei g = K*f ist und K den Korrekturfaktor bezeichnet. Im linearen Fall ist also g(DF) = K*m*DF + K*f(0).

In verschiedenen Ausführungsformen handelt es sich bei dem ersten Zusammenhang um einen linearen Zusammenhang, sodass es sich bei dem korrigierten ersten Zusammenhang ebenfalls um einen linearen Zusammenhang handelt, wobei eine Steigung des korrigierten ersten Zusammenhangs einer Steigung des ersten Zusammenhangs multipliziert mit dem Korrekturfaktor entspricht.

Der Korrekturfaktor kann beispielsweise basierend auf einem vorgegebenen weiteren Zusammenhang bestimmt werden, welcher den ersten Istwert dem Korrekturfaktor zuordnen.

Der weitere Zusammenhang kann beispielsweise in einer Umsetzungstabelle, auch als Lookup-Tabelle, LUT, bezeichnet, in einer Speichereinheit der Benutzereingabevorrichtung, insbesondere der Auswerteeinheit, gespeichert sein. Der weitere Zusammenhang kann dabei vorab experimentell ermittelt werden und entsprechend hinterlegt werden.

Gemäß zumindest einer Ausführungsform wird der erste Zusammenhang bei einem ersten Temperaturwert einer Umgebungstemperatur der Benutzereingabevorrichtung bestimmt. Mit anderen Worten wird die Umgebungstemperatur zur Bestimmung des ersten Zusammenhangs auf den ersten Temperaturwert eingestellt beziehungsweise entsprechend geregelt. Ebenfalls in dem ersten Kalibrierungsschritt, also insbesondere nach oder vor der Bestimmung des ersten Zusammenhangs, wird ein zweiter Zusammenhang zwischen der Änderung der Betätigungskraft und der Änderung des Sensorsignals bei einem zweiten Temperaturwert der Umgebungstemperatur bestimmt. Mit anderen Worten wird die Umgebungstemperatur zur Bestimmung des zweiten Zusammenhangs auf den zweiten Temperaturwert eingestellt oder entsprechend geregelt. Der erste Istwert wird in dem zweiten Kalibrierungsschritt bei dem ersten Temperaturwert der Umgebungstemperatur bestimmt. In dem zweiten Kalibrierungsschritt wird außerdem ein zweiter Istwert des Sensorsignals bei dem zweiten Temperaturwert der Umgebungstemperatur bestimmt und der zweite Zusammenhang wird abhängig von dem zweiten Istwert korrigiert.

Dabei können die Bestimmung des ersten Temperaturwerts und die Korrektur des ersten Zusammenhangs zeitlich unabhängig von der Bestimmung des zweiten Istwerts und der Korrektur des zweiten Zusammenhangs erfolgen. Beispielsweise kann während des zweiten Kalibrierungsschritts die Umgebungstemperatur gemessen werden, beispielsweise mittels eines Temperatursensors des Kraftfahrzeugs oder der Benutzereingabevorrichtung, der mit der Auswerteeinheit der Benutzereingabevorrichtung verbunden ist. Ist die gemessene Umgebungstemperatur gleich dem ersten Temperaturwert oder in einem vorgegebenen Toleranzbereich um den ersten Temperaturwert, so kann der erste Zusammenhang abhängig von dem ersten Istwert korrigiert werden. Ist die gemessene Umgebungstemperatur gleich dem zweiten Temperaturwert oder in einem vorgegebenen Toleranzbereich um den zweiten Temperaturwert, so kann der zweite Zusammenhang abhängig von dem zweiten Istwert korrigiert werden.

Die Ausführungen bezüglich des ersten Istwerts beziehungsweise des ersten Zusammenhangs lassen sich analog auf den zweiten Istwert beziehungsweise den zweiten Zusammenhang übertragen.

Das Verfahren ist nicht auf die Bestimmung des ersten und des zweiten Zusammenhangs bei dem ersten und dem zweiten Temperaturwert beschränkt. Insbesondere können entsprechende Zusammenhänge zwischen der Änderung der Betätigungskraft und der Änderung des Sensorsignals bei einer Vielzahl von Temperaturwerten der Umgebungstemperatur inklusive des ersten Temperaturwerts und des zweiten Temperaturwerts bestimmt werden. Mit anderen Worten lässt sich so ein Kennlinienfeld oder ein Kennfeld der Änderung des Sensorsignals als Funktion der Änderung der Betätigungskraft sowie der Umgebungstemperatur bestimmen. Je nachdem, welche Umgebungstemperatur im zweiten Kalibrierungsschritt gerade vorliegt, kann eine entsprechende Korrektur des jeweiligen Zusammenhangs erfolgen. So kann die Zuverlässig auch bei verschiedenen Umgebungstemperaturen weiter erhöht werden.

Gemäß zumindest einer Ausführungsform wird, insbesondere mittels der Auswerteeinheit, ein Schwellwert bestimmt, der gemäß dem korrigierten ersten Zusammenhang einer Änderung der Betätigungskraft entspricht, deren Wert gleich einem vorgegebenen Wert für die Minimalkraft ist und der Schwellwert wird auf einer Speichereinheit der Benutzereingabevorrichtung, insbesondere der Auswerteeinheit, gespeichert.

In entsprechenden Ausführungsformen kann für die erste und die zweite Temperatur beziehungsweise für alle Temperaturen, für die ein entsprechender Zusammenhang bestimmt wurde, ein zugehöriger Schwellwert bestimmt werden. Mit anderen Worten wird also ein umgebungstemperaturabhängiger Schwellwert bestimmt, der für die jeweilige Temperatur, insbesondere Umgebungstemperatur, gleich dem vorgegebenen Wert für die Minimalkraft ist.

Der Schwellwert kann dann von der Auswerteeinheit verwendet werden, um zu erkennen, ob eine Betätigung der Benutzereingabevorrichtung durch einen Benutzer vorliegt oder nicht.

Gemäß einem weiteren Aspekt der Erfindung wird ein Verfahren zur Detektion einer Betätigung einer Benutzereingabevorrichtung eines Kraftfahrzeugs angegeben.

Die Benutzereingabevorrichtung weist eine Komponente mit einer berührungsempfindlichen Oberfläche und ein mit der Komponente mechanisch verbundenes Referenzelement auf. Die Benutzereingabevorrichtung weist einen Schaltungsträger und einen Abstandssensor auf, der auf dem Schaltungsträger angeordnet und dazu eingerichtet ist, abhängig von einem Abstand des Referenzelements von dem Abstandssensor ein Sensorsignal zu erzeugen. Die Benutzereingabevorrichtung weist eine Auswerteeinheit auf, die dazu eingerichtet, ist eine Berührung der berührungsempfindlichen Oberfläche durch einen Benutzer zu detektieren und das Sensorsignal von dem Abstandssensor zu erhalten.

Zur Durchführung eines erfindungsgemäßen Verfahrens zur Detektion einer Betätigung einer Benutzereingabevorrichtung wird ein erfindungsgemäßes Verfahren zur Kalibrierung der Benutzereingabevorrichtung durchgeführt, insbesondere in einer Ausführungsform, in der der Schwellwert bestimmt wird, der gemäß dem korrigierten ersten Zusammenhang der Änderung der Betätigungskraft entspricht, deren Wert gleich dem vorgegeben Wert für die Minimalkraft ist und der Schwellwert auf der Speichereinheit der Benutzereingabevorrichtung gespeichert wird. Nach der Korrektur des ersten Zusammenhangs wird, insbesondere mittels der Auswerteeinheit, ein weiterer Istwert für das Sensorsignal bestimmt. Eine Differenz zwischen dem ersten Istwert und dem weiteren Istwert wird mittels der Auswerteeinheit mit dem gespeicherten Schwellwert verglichen und die Betätigung der Benutzereingabevorrichtung wird mittels der Auswerteeinheit nur dann detektiert, wenn die Differenz zwischen dem ersten Istwert und dem weiteren Istwert größer ist als der Schwellwert, insbesondere nur dann, wenn die Differenz größer ist als der Schwellwert und die Berührung der berührungsempfindlichen Oberfläche detektiert wurde.

In entsprechenden Ausführungsformen kann die Umgebungstemperatur gemessen werden und der entsprechende Schwellwert herangezogen werden, der gemäß dem umgebungstemperaturabhängigen Kennfeld der gemessenen Umgebungstemperatur entspricht.

Gemäß zumindest einer Ausführungsform des erfindungsgemäßen Verfahrens zur Detektion einer Betätigung der Benutzereingabevorrichtung wird mittels der Auswerteeinheit die Berührung der berührungsempfindlichen Oberfläche detektiert und die Betätigung der Benutzereingabevorrichtung wird mittels der Auswerteeinheit nur dann detektiert, insbesondere genau dann detektiert, wenn die Differenz zwischen dem ersten Istwert und dem weiteren Istwert größer ist als der Schwellwert, während die Berührung der berührungsempfindlichen Oberfläche detektiert wird.

Gemäß einem weiteren Aspekt der Erfindung wird eine Benutzereingabevorrichtung für ein Kraftfahrzeug angegeben. Die Benutzereingabevorrichtung weist eine Komponente mit einer berührungsempfindlichen Oberfläche und ein mit der Komponente mechanisch verbundenes Referenzelement auf, einen Schaltungsträger sowie einen Abstandssensor, der auf dem Schaltungsträger angeordnet ist und dazu eingerichtet ist, abhängig von einem Abstand des Referenzelements von dem Abstandssensor ein Sensorsignal zu erzeugen. Die Benutzereingabevorrichtung weist eine Speichereinheit auf, welche einen ersten Zusammenhang zwischen einer Änderung einer auf die berührungsempfindliche Oberfläche ausgeübten Betätigungskraft und einer Änderung des Sensorsignals speichert. Die Benutzereingabevorrichtung weist eine Auswerteeinheit auf, die dazu eingerichtet ist, eine Berührung der berührungsempfindlichen Oberfläche durch einen Benutzer zu detektieren, das Sensorsignal von dem Abstandssensor zu erhalten, einen ersten Istwert des Sensorsignals zu bestimmen und den ersten Zusammenhang abhängig von dem ersten Istwert zu korrigieren.

Die Benutzereingabevorrichtung ist insbesondere dazu eingerichtet, den ersten Zusammenhang zu korrigieren, wenn die Benutzereingabevorrichtung in dem Kraftfahrzeug montiert ist.

Gemäß zumindest einer Ausführungsform der erfindungsgemäßen Benutzereingabevorrichtung ist die Auswerteeinheit dazu eingerichtet, einen Schwellwert zu bestimmen, der gemäß dem korrigierten ersten Zusammenhang einer Änderung der Betätigungskraft entspricht, deren Wert gleich einem vorgegebenen Wert für die Minimalkraft ist und den Schwellwert auf der Speichereinheit zu speichern.

Gemäß zumindest einer Ausführungsform ist die Auswerteeinheit dazu eingerichtet, nach der Korrektur des ersten Zusammenhangs einen weiteren Istwert für das Sensorsignal zu bestimmen, eine Differenz zwischen dem ersten Istwert und dem weiteren Istwert mit dem gespeicherten Schwellwert zu vergleichen und eine Betätigung der Benutzereingabevorrichtung mittels der Auswerteeinheit nur dann zu detektieren, wenn die Differenz zwischen dem ersten Istwert und dem weiteren Istwert größer ist als der Schwellwert.

Insbesondere ist die Auswerteeinheit dazu eingerichtet, die Betätigung der Benutzereingabevorrichtung nur dann zu detektieren, wenn die Differenz zwischen dem ersten Istwert und dem weiteren Istwert größer ist, als der Schwellwert, während die Berührung der berührungsempfindlichen Oberfläche detektiert wird.

Gemäß einem weiteren Aspekt der Erfindung wird auch ein Kraftfahrzeug mit meiner erfindungsgemäßen Benutzereingabevorrichtung angegeben.

Weitere Ausführungsformen der Benutzereingabevorrichtung folgen unmittelbar aus den verschiedenen Ausgestaltungsformen des erfindungsgemäßen Verfahrens zur Kalibrierung einer Benutzereingabevorrichtung sowie des erfindungsgemäßen Verfahrens zur Detektion einer Betätigung einer Benutzereingabevorrichtung und umgekehrt.

Ist im Rahmen der vorliegenden Offenbarung die Rede davon, dass eine Komponente der Benutzereingabevorrichtung, insbesondere die Auswerteeinheit der Benutzereingabevorrichtung, oder die externe Recheneinheit dazu eingerichtet, ausgebildet, ausgelegt, oder dergleichen ist, eine bestimmte Funktion auszuführen oder zu realisieren, eine bestimmte Wirkung zu erzielen oder einem bestimmten Zweck zu dienen, so kann dies derart verstanden werden, dass die Komponente, über die prinzipielle oder theoretische Verwendbarkeit oder Eignung der Komponente für diese Funktion, Wirkung oder diesen Zweck hinaus, durch eine entsprechende Anpassung, Programmierung, physische Ausgestaltung und so weiter konkret und tatsächlich dazu in der Lage ist, die Funktion auszuführen oder zu realisieren, die Wirkung zu erzielen oder dem Zweck zu dienen.

Ein aktives optisches Sensorsystem, insbesondere die Emittereinheit, weist definitionsgemäß eine Lichtquelle zum Aussenden von Licht beziehungsweise von Lichtimpulsen auf. Die Lichtquelle kann insbesondere als Laser ausgestaltet sein, beispielsweise als Infrarotlaser. Des Weiteren weist ein aktives optisches Sensorsystem, insbesondere die Detektoreinheit, definitionsgemäß wenigstens einen optischen Detektor auf, um reflektierte Anteile des ausgesendeten Lichts zu erfassen. Das aktive optische Sensorsystem ist insbesondere dazu eingerichtet, basierend auf den detektierten Anteilen des Lichts das Sensorsignal und gegebenenfalls eines oder mehrere weitere Sensorsignale zu erzeugen und zu verarbeiten oder auszugeben.

Der Begriff "Licht" kann derart verstanden werden, dass davon elektromagnetische Wellen im sichtbaren Bereich, im infraroten Bereich und/oder im ultravioletten Bereich umfasst sind. Dementsprechend kann auch der Begriff "optisch" derart verstanden werden, dass er sich auf Licht nach diesem Verständnis bezieht.

Die Auswerteeinheit kann auch als Recheneinheit aufgefasst werden. Unter einer Recheneinheit kann insbesondere ein Datenverarbeitungsgerät verstanden werden, die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstelle und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer Festwertspeicher, EPROM (englisch: "erasable read-only memory"), als elektrisch löschbarer Festwertspeicher, EEPROM (englisch: "electrically erasable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

In den Figuren zeigen:
- Fig. 1: eine schematische Darstellung einer beispielhaften Ausführungsform einer erfindungsgemäßen Benutzereingabevorrichtung;
- Fig. 2: eine schematische Darstellung einer weiteren beispielhaften Ausführungsform einer erfindungsgemäßen Benutzereingabevorrichtung;
- Fig. 3: eine schematische Darstellung einer weiteren beispielhaften Ausführungsform einer erfindungsgemäßen Benutzereingabevorrichtung;
- Fig. 4: eine schematische Darstellung einer weiteren beispielhaften Ausführungsform einer erfindungsgemäßen Benutzereingabevorrichtung;
- Fig. 5: schematisch einen beispielhaften Zusammenhang zwischen einem Sensorsignal eines Abstandssensors und einem Abstand eines Referenzelements von des Abstandssensors;
- Fig. 6: schematisch einen beispielhaften Verlauf eines Korrekturfaktors;
- Fig. 7: schematisch einen weiteren beispielhaften Verlauf eines Korrekturfaktors; und
- Fig. 8: schematisch einen weiteren beispielhaften Verlauf eines Korrekturfaktors;

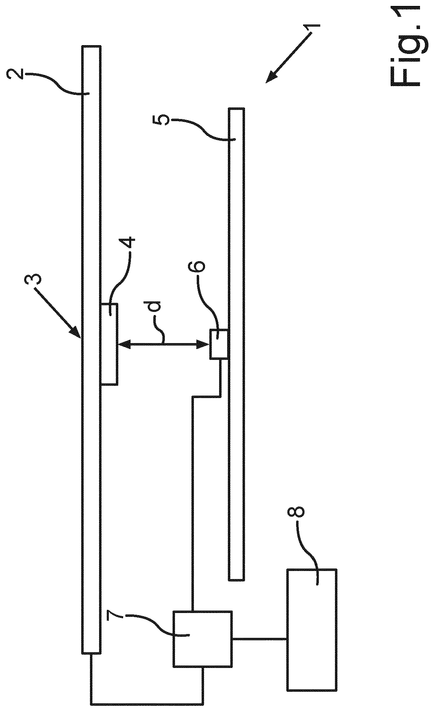

In Fig. 1 ist schematisch eine beispielhafte Ausführungsform einer erfindungsgemäßen Benutzereingabevorrichtung 1 für ein Kraftfahrzeug (nicht dargestellt) gezeigt. Die Benutzereingabevorrichtung 1 weist eine Komponente 2, insbesondere eine Blende, auf, die eine berührungsempfindliche Oberfläche 3 aufweist, welche bei bestimmungsgemäßer Montage der Benutzereingabevorrichtung 1 in dem Kraftfahrzeug einem Benutzer des Kraftfahrzeugs im Fahrzeuginnenraum, insbesondere in einer Fahrerkabine des Kraftfahrzeugs, zugewandt ist, sodass der Benutzer die berührungsempfindliche Oberfläche 3 berühren kann.

Die Benutzereingabevorrichtung 1 weist außerdem, insbesondere auf einer dem Benutzer abgewandten Seite der Komponente 2, einen Schaltungsträger 5 auf, auf dem ein Abstandssensor 6, der beispielsweise als aktives optisches Sensorsystem ausgestaltet ist, angeordnet ist. Die Benutzereingabevorrichtung 1 weist auf der dem Abstandssensor 6 zugewandten Seite der Komponente 2 auch ein Referenzelement 4 auf, das Teil der Komponente 2 ist oder mechanisch starr mit der Komponente 2 verbunden ist. Der Abstandssensor 6 kann dementsprechend ein Sensorsignal erzeugen, das einem Abstand d zwischen dem Abstandssensor 6 und dem Referenzelement 4 entspricht.

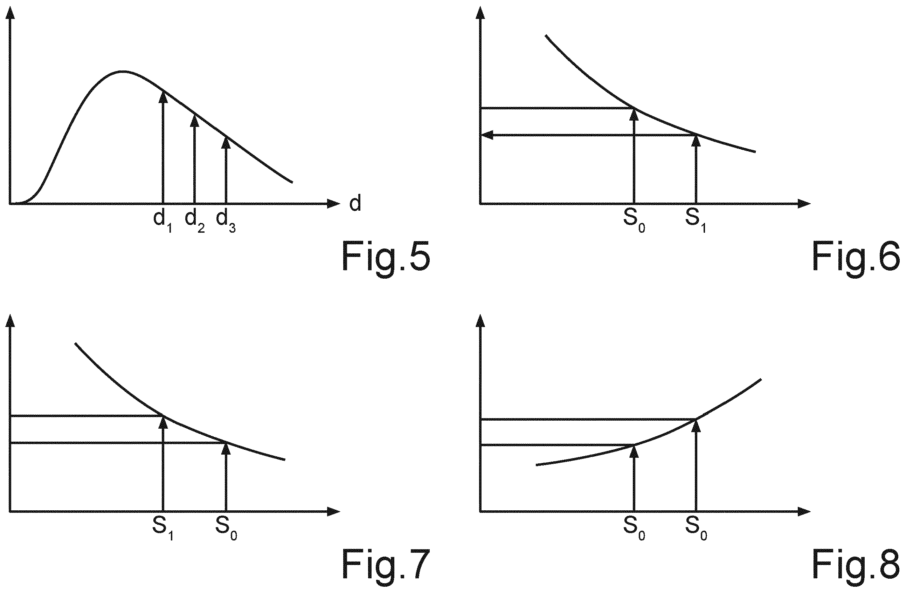

Ein beispielhafter Verlauf des Sensorsignals als Funktion des Abstands d ist schematisch in Fig. 5 dargestellt. In Fig. 5 sind ferner drei Werte d₁, d₂, d₃ eingetragen, die in einem linearen Bereich des Sensorsignals liegen. Der Abstandssensor 6 ist beispielsweise derart voreingestellt oder vorgesteuert, beispielsweise durch Einstellung einer entsprechenden Sperrspannung eines optischen Detektors oder dergleichen, dass relevante Abstände d in dem linearen Bereich liegen, um eine Eindeutigkeit der Messung zu gewährleisten.

Die Benutzereingabevorrichtung 1 weist außerdem eine Auswerteeinheit 7 auf, die zum einen mit der berührungsempfindlichen Oberfläche 3 und zum anderen mit dem Abstandssensor 6 verbunden ist. Die Auswerteeinheit 7 kann damit zum einen eine Berührung der berührungsempfindlichen Oberfläche 3 durch einen Benutzer detektieren und zum anderen das Sensorsignal von dem Abstandssensor 6 erhalten.

Zur Durchführung eines erfindungsgemäßen Verfahrens zur Kalibrierung der Benutzereingabevorrichtung 1 kann optional eine externe Recheneinheit 8 vorgesehen sein, die mit der Auswerteeinheit 7 verbunden ist. Alternativ kann die Auswerteeinheit 7 die Funktion der externen Recheneinheit 8 übernehmen.

Zur Durchführung des erfindungsgemäßen Verfahrens zur Kalibrierung wird zunächst vor der Montage der Benutzereingabevorrichtung 1 in dem Kraftfahrzeug ein erster Kalibrierungsschritt durchgeführt. Dabei wird ein Zusammenhang zwischen der Änderung der Betätigungskraft und der Änderung des Sensorsignals bestimmt. Sodann wird die Benutzereingabevorrichtung 1 in einem Montageschritt in dem Kraftfahrzeug verbaut. Danach wird ein zweiter Kalibrierungsschritt durchgeführt, um den im ersten Kalibrierungsschritt bestimmten Zusammenhang zu korrigieren und dadurch Verbiegungen oder Vorspannungen der Komponente 2, die beim Verbau in dem Kraftfahrzeug auftreten oder sich verändern, kompensieren zu können. Dazu wird im zweiten Kalibrierungsschritt ein Istwert des Sensorsignals bestimmt, während keine Betätigungskraft auf die Komponente 2 ausgeübt wird, und der Zusammenhang wird abhängig von dem Istwert korrigiert.

Beispielsweise kann auf einer Speichereinheit (nicht dargestellt) der Benutzereingabevorrichtung 1, insbesondere der Auswerteeinheit 7, eine Umsetzungstabelle gespeichert sein, die dem Istwert einen Korrekturfaktor zuordnet. Der Zusammenhang zwischen Änderung der Betätigungskraft und Änderung des Sensorsignals aus dem ersten Kalibrierungsschritt kann dann mit dem Korrekturfaktor multipliziert werden, um den Zusammenhang zu kalibrieren. Dazu kann insbesondere die Steigung des Zusammenhangs mit dem Korrekturfaktor multipliziert werden, wenn es sich bei dem Zusammenhang um einen linearen oder näherungsweise linearen Zusammenhang handelt.

Die Auswerteeinheit 7 kann dann abhängig von dem korrigierten Zusammenhang einen Schwellwert bestimmen, der einer vorgegebenen Minimalkraft entspricht, die der Betätigung durch einen Benutzer zugeordnet ist. Mit anderen Worten ist eine Minimalkraft vorgegeben, wobei eine Betätigung der Benutzereingabevorrichtung 1 durch einen Benutzer nur dann detektiert werden soll, wenn zum einen die berührungsempfindliche Oberfläche 3 berührt wird und zum anderen mindestens eine Betätigungskraft in Höhe der vorgegebenen Minimalkraft auf die Komponente 2 ausgeübt wird, was zu einer entsprechenden Veränderung des Abstands d führt und wiederum durch eine Veränderung des Sensorsignals detektiert werden kann. Durch die Bestimmung des Schwellwerts anhand des korrigierten Zusammenhangs wird sichergestellt, dass der Schwellwert der von der Auswerteeinheit zur Verifizierung der Betätigung herangezogen wird, auch tatsächlich der vorgegebene Wert für die Minimalkraft ist. Bauteiltoleranzen und Verbiegungen beziehungsweise Vorspannungen bei der Herstellung und Montage der Benutzereingabevorrichtung 1 können somit kompensiert werden.

Der erste Kalibrierungsschritt kann dabei mittels der externen Recheneinheit 8 oder alternativ mittels der Auswerteeinheit 7 durchgeführt werden. Der zweite Kalibrierungsschritt wird vorzugsweise mittels der Auswerteeinheit 7 durchgeführt.

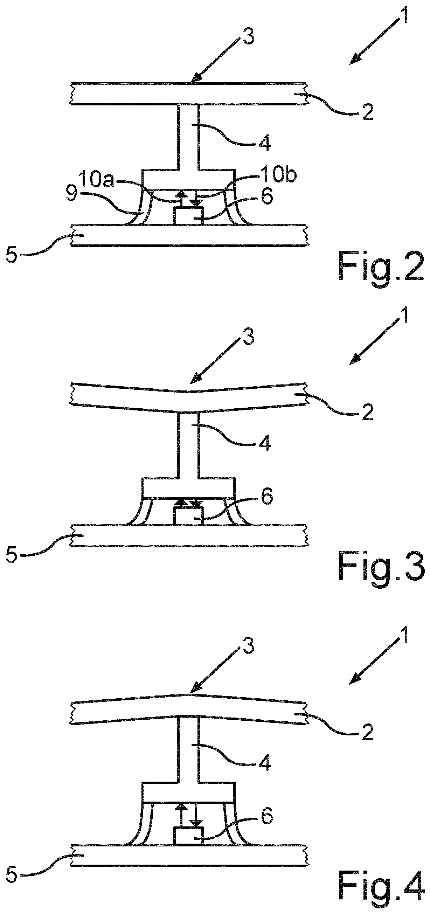

In Fig. 2 ist schematisch eine weitere beispielhafte Ausführungsform der erfindungsgemäßen Benutzereingabevorrichtung 1 dargestellt, wobei der Übersichtlichkeit halber die Auswerteeinheit 7 und die externe Recheneinheit 8 nicht dargestellt sind.

Im Beispiel der Fig. 2 ist der Abstandssensor 6 beispielsweise als aktives optisches Sensorsystem ausgestaltet, das eine Emittereinheit (nicht dargestellt), beispielsweise eine Infrarotlaserdiode oder eine Infrarot-LED, sowie eine Detektoreinheit (nicht dargestellt), beispielsweise mit einem oder mehreren optischen Detektoren, wie beispielsweise einer oder mehreren Photodioden, enthält. Die Emittereinheit emittiert Licht 10a in Richtung des Referenzelements 4 und die Detektoreinheit detektiert reflektierte Anteile 10b des Lichts, die von dem Referenzelement 4 reflektiert werden. Das Sensorsignal kann dann beispielsweise proportional zur detektierten Intensität der reflektierten Anteile 10b erzeugt werden, und repräsentiert damit den Abstand d.

Wie ebenfalls in Fig. 2 gezeigt, kann das Referenzelement 4 beispielsweise als Stößel oder stempelförmig ausgebildet sein, und ist mit der Komponente 2 verbunden. Der Stößel kann dabei an einer dem Abstandssensor 6 zugewandten Seite beispielsweise durch eine Gummimembran 9 oder ein ähnliches Abdichtelement mit dem Schaltungsträger 5 verbunden sein, sodass der Abstandssensor 6 von der Gummimembran 9 und dem Referenzelement 4 sowie dem Schaltungsträger 5 komplett eingeschlossen wird. So kann eine Verunreinigung des Bereichs zwischen dem Stößel und dem Abstandssensor 6 verhindert werden, was die Zuverlässigkeit der Abstandsmessung auf Dauer erhöht. Die Gummimembran 9 ist dabei flexibel ausgestaltet, sodass sich der Stößel nach wie vor bezüglich des Abstandssensors 6 bewegen kann. Mit Vorteil kann die Gummimembran auch eine Rückstellkraft erzeugen, die, wenn der Benutzer keine Betätigungskraft mehr auf die Komponente 2 ausübt, den Stößel in die Neutralposition zurückführt.

In Fig. 2 ist die Komponente 2 schematisch als im Wesentlichen ebene Platte dargestellt. In Fig. 3 und Fig. 4 ist die Benutzereingabevorrichtung 1 der Fig. 2 erneut dargestellt, wobei unterschiedliche Verformungen der Komponente 2 skizziert sind. Diese unterschiedlichen Verformungen, insbesondere eine konkave Verformung in Fig. 3 und eine konvexe Verformung in Fig. 4, können beispielsweise durch das Design der Komponente 2, durch innere Spannungen in der Komponente 2 oder durch Spannungen oder Verformungen aufgrund der Montage der Benutzereingabevorrichtung 1 in dem Kraftfahrzeug bedingt sein.

Je nachdem, wie die Komponente 2 mit entsprechenden Vorspannungen oder Kräften beaufschlagt ist, kann eine gegebene Betätigungskraft zu einer größeren oder kleineren Abstandsänderung und dementsprechend zu einer unterschiedlichen Änderung des Sensorsignals führen. Durch die zweistufige Kalibrierung gemäß dem erfindungsgemäßen Verfahren wird dem Rechnung getragen, sodass stets der richtige Schwellwert für das Sensorsignal zur Verfügung steht.

In den Fig. 6 bis Fig. 8 sind schematisch beispielhafte Verläufe des Korrekturfaktors als Funktion des Istwerts des Sensorsignals dargestellt. In dem Beispiel der Fig. 6 ist beispielsweise eine konkave Vorspannung der Blende, wie sie in Fig. 3 skizziert ist, gegeben.

Das Sensorsignal ist auf der horizontalen Achse aufgetragen, der Korrekturfaktor auf der vertikalen Achse. Der Wert S₀ entspricht einem Wert des Sensorsignals vor der Montage der Benutzereingabevorrichtung 1 in dem Kraftfahrzeug. Dementsprechend ist der Korrekturfaktor bei S₀ gleich 1. Der Wert S₁ entspricht dem im zweiten Kalibrierungsschritt gemessenen Istwert des Sensorsignals. Im Beispiel der Fig. 6 ist dieser größer als S₀ und der zugehörige Korrekturfaktor ist kleiner als 1.

Entsprechend ist in Fig. 7 schematisch ein Verlauf des Korrekturfaktors für eine konvexe Komponente 2, wie sie in Fig. 4 skizziert ist, dargestellt. Hier ist der Wert S₁ beispielsweise kleiner als der Wert S₀ und der Korrekturfaktor entsprechend größer als 1.

Es sei betont, dass der Verlauf des Korrekturfaktors als Funktion des Sensorsignals beziehungsweise des Istwerts des Sensorsignals von den konkreten Bedingungen des Einzelfalls abhängt und daher nicht notwendigerweise universell angegeben werden kann, sondern durch Experimente bestimmt werden kann. Insbesondere ist der Verlauf nicht notwendigerweise abfallend wie es in Fig. 6 und Fig. 7 skizziert ist. Schematisch ist in Fig. 8 ein weiterer Verlauf für den Korrekturfaktor als Funktion des Istwerts des Sensorsignals gezeigt, der ebenfalls einer konkaven Blende, wie in Fig. 3 skizziert, entspricht. Hier ist der Wert S₁, wie auch für Fig. 6 dargestellt, größer als der Wert S₀, der Korrekturfaktor ist jedoch in dieser konkreten Situation größer als 1.

Wie insbesondere unter Bezug auf die Figuren beschrieben, ermöglicht es die Erfindung, die Zuverlässigkeit der Detektion der Betätigung einer Benutzereingabevorrichtung mit einer berührungsempfindlichen Oberfläche zu erhöhen.

Bei sogenannten smarten Bedienoberflächen kann die als Bedienfläche genutzte Blende unterschiedlich stark gekrümmt sein. Dies ist beispielsweise dem Spritzgussprozess bei der Herstellung der Blende, beispielsweise aus Polycarbonat und Polyurethan, und einem entsprechenden Nachtempern geschuldet. Je nach Krümmung, inneren Spannungen und Zusammenspiel mit anderen mechanischen Teilen der Benutzereingabevorrichtung kann für eine Betätigung mit der gleichen Betätigungskraft an der gleichen Stelle ein unterschiedlicher Durchbiegungsweg der Blende detektiert werden. Zudem kommt eine zusätzliche Verbiegung und/oder Verspannung der Blende durch das Verschrauben der Benutzereingabevorrichtung in dem Armaturenbrett des Fahrzeugs.

Je nachdem, wie stark die Blende entsprechend gekrümmt oder verzogen ist, wird sich eine Betätigung mit einer definierten Kraft am selben Ort, beispielsweise einem Touchbutton oder Softkey, durch einen verschiedenen Verformungsweg äußern, der gemessen werden kann.

Um sowohl den mechanischen Toleranzen und dem Blendenverzug als auch der möglichen Verfälschung der Kalibrierung durch Einschrauben oder Montieren der Benutzereingabevorrichtung in das Kraftfahrzeug zu begegnen, kann in Ausführungsformen der Erfindung beispielsweise ein softwaretechnischer Nachjustierungsprozess umgesetzt werden. Vor der Montage der Benutzereingabevorrichtung wird dementsprechend die Änderung des Sensorsignals kalibriert. Der nach der Montage vorliegende Abstand zwischen dem Abstandssensor und einer entsprechenden Referenzstelle, der von der tatsächlichen Blendenkrümmung und Blendenvorspannung abhängt, kann als Istwert des Sensorsignals gemessen werden. Je nach absolutem Wert des Sensorsignals kann der kalibrierte Zusammenhang beispielsweise über eine Lookup-Tabelle korrigiert werden. Die Lookup-Tabelle und die darin enthaltenen Korrekturfaktoren können beispielsweise experimentell an echten Teilen ermittelt werden.

## Patentansprüche

1. Verfahren zur Kalibrierung einer Benutzereingabevorrichtung (1) für ein Kraftfahrzeug, wobei
- die Benutzereingabevorrichtung (1)
- eine Komponente (2) mit einer berührungsempfindlichen Oberfläche (3) und ein mit der Komponente (2) mechanisch verbundenes Referenzelement (4) aufweist;
- einen Schaltungsträger (5) und einen Abstandssensor (6) aufweist, der auf dem Schaltungsträger (5) angeordnet ist und dazu eingerichtet ist, abhängig von einem Abstand des Referenzelements (4) von dem Abstandssensor (6) ein Sensorsignal zu erzeugen; und
- eine Auswerteeinheit (7) aufweist, die dazu eingerichtet ist, eine Betätigung der Benutzereingabevorrichtung (1) zu detektieren, wenn die berührungsempfindliche Oberfläche (3) durch einen Benutzer berührt wird und gleichzeitig eine Betätigungskraft auf die berührungsempfindliche Oberfläche (3) ausgeübt wird, die größer oder gleich einer vorgebbaren Minimalkraft ist;
**dadurch gekennzeichnet, dass**
- in einem ersten Kalibrierungsschritt ein erster Zusammenhang zwischen einer Änderung der Betätigungskraft und einer Änderung des Sensorsignals bestimmt wird;
- die Benutzereingabevorrichtung (1) in einem Montageschritt nach Durchführung des ersten Kalibrierungsschritts in dem Kraftfahrzeug verbaut wird;
- in einem zweiten Kalibrierungsschritt nach Durchführung des Montageschritts ein erster Istwert des Sensorsignals bestimmt wird und der erste Zusammenhang abhängig von dem ersten Istwert korrigiert wird;
- eine erste Betätigungskraft mit einem von Null verschiedenen ersten Kraftwert auf die berührungsempfindliche Oberfläche (3) ausgeübt wird und ein erster Wert des Sensorsignals während der Ausübung der ersten Betätigungskraft bestimmt wird;
- in einer Vielzahl von Iterationen jeweils eine zweite Betätigungskraft mit einem von Null verschiedenen zweiten Kraftwert auf die berührungsempfindliche Oberfläche (3) ausgeübt wird und ein zweiter Wert des Sensorsignals während der Ausübung der zweiten Betätigungskraft bestimmt wird; und
- für jede der Vielzahl von Iterationen die Änderung des Sensorsignals als Differenz zwischen dem ersten Wert und dem zweiten Wert des Sensorsignals bestimmt wird, um den ersten Zusammenhang in dem ersten Kalibrierungsschritt zu bestimmen.

2. Verfahren zur Kalibrierung einer Benutzereingabevorrichtung (1) nach Anspruch 1, **dadurch gekennzeichnet, dass**
der erste Istwert des Sensorsignals bestimmt wird, während keine Betätigungskraft auf die berührungsempfindliche Oberfläche (3) ausgeübt wird.

3. Verfahren zur Kalibrierung einer Benutzereingabevorrichtung (1) nach einem der vorhergehenden Ansprüche,
**dadurch gekennzeichnet, dass**
zum Bestimmen des ersten Istwerts des Sensorsignals mittels einer Emittereinheit des Abstandssensors (6) Licht (10a) in Richtung des Referenzelement (4) emittiert wird und mittels einer Detektoreinheit des Abstandssensors (6) von dem Referenzelement (4) reflektierte Anteile (10b) des Lichts (10a) erfasst werden.

4. Verfahren zur Kalibrierung einer Benutzereingabevorrichtung (1) nach einem der vorhergehenden Ansprüche,
**dadurch gekennzeichnet, dass**
zum Korrigieren des ersten Zusammenhangs ein Korrekturfaktor abhängig von dem ersten Istwert des Sensorsignals bestimmt wird und der erste Zusammenhang mit dem Korrekturfaktor multipliziert wird.

5. Verfahren zur Kalibrierung einer Benutzereingabevorrichtung (1) nach Anspruch 4, **dadurch gekennzeichnet, dass**
der Korrekturfaktor basierend auf einem vorgegebenen weiteren Zusammenhang bestimmt wird, der dem ersten Istwert den Korrekturfaktor zuordnet.

6. Verfahren zur Kalibrierung einer Benutzereingabevorrichtung (1) nach einem der vorhergehenden Ansprüche,
**dadurch gekennzeichnet, dass**
- der erste Zusammenhang bei einem ersten Temperaturwert einer Umgebungstemperatur der Benutzereingabevorrichtung (1) bestimmt wird;
- in dem ersten Kalibrierungsschritt ein zweiter Zusammenhang zwischen der Änderung der Betätigungskraft und der Änderung des Sensorsignals bei einem zweiten Temperaturwert der Umgebungstemperatur bestimmt wird;
- der erste Istwert in dem zweiten Kalibrierungsschritt bei dem ersten Temperaturwert der Umgebungstemperatur bestimmt wird; und
- in dem zweiten Kalibrierungsschritt ein zweiter Istwert des Sensorsignals bei dem zweiten Temperaturwert der Umgebungstemperatur bestimmt wird und der zweite Zusammenhang abhängig von dem zweiten Istwert korrigiert wird.

7. Verfahren zur Kalibrierung einer Benutzereingabevorrichtung (1) nach einem der vorhergehenden Ansprüche,
**dadurch gekennzeichnet, dass**
ein Schwellwert bestimmt wird, der gemäß dem korrigierten ersten Zusammenhang einer Änderung der Betätigungskraft entspricht, deren Wert gleich einem vorgegebenen Wert für die Minimalkraft ist und der Schwellwert auf einer Speichereinheit der Benutzereingabevorrichtung (1) gespeichert wird.

8. Verfahren zur Detektion einer Betätigung einer Benutzereingabevorrichtung (1) eines Kraftfahrzeugs,
**dadurch gekennzeichnet, dass**
- ein Verfahren zur Kalibrierung einer Benutzereingabevorrichtung (1) nach Anspruch 7 durchgeführt wird;
- nach der Korrektur des ersten Zusammenhangs ein weiterer Istwert für das Sensorsignal bestimmt wird;
- eine Differenz zwischen dem ersten Istwert und dem weiteren Istwert mittels der Auswerteeinheit (7) mit dem gespeicherten Schwellwert verglichen wird; und
- die Betätigung der Benutzereingabevorrichtung (1) mittels der Auswerteeinheit (7) nur dann detektiert wird, wenn die Differenz zwischen dem ersten Istwert und dem weiteren Istwert größer ist als der Schwellwert.

9. Verfahren zur Detektion einer Betätigung einer Benutzereingabevorrichtung (1) nach Anspruch 8,
**dadurch gekennzeichnet, dass**
- mittels der Auswerteeinheit (7) eine Berührung der berührungsempfindlichen Oberfläche (3) detektiert wird; und
- die Betätigung der Benutzereingabevorrichtung (1) mittels der Auswerteeinheit (7) nur dann detektiert wird, wenn die Differenz zwischen dem ersten Istwert und dem weiteren Istwert größer ist, als der Schwellwert, während die Berührung der berührungsempfindlichen Oberfläche (3) detektiert wird.

10. Benutzereingabevorrichtung (1) für ein Kraftfahrzeug, aufweisend
- eine Komponente (2) mit einer berührungsempfindlichen Oberfläche (3) und ein mit der Komponente (2) mechanisch verbundenes Referenzelement (4);
- einen Schaltungsträger (5) und einen Abstandssensor (6), der auf dem Schaltungsträger (5) angeordnet ist und dazu eingerichtet ist, abhängig von einem Abstand des Referenzelements (4) von dem Abstandssensor (6) ein Sensorsignal zu erzeugen;
- eine Speichereinheit, welche einen ersten Zusammenhang zwischen einer Änderung einer auf die berührungsempfindliche Oberfläche (3) ausgeübten Betätigungskraft und einer Änderung des Sensorsignals speichert; und
- eine Auswerteeinheit (7), die dazu eingerichtet ist, ein Verfahren gemäß einem der Ansprüche 8 oder 9 durchzuführen und eine Berührung der berührungsempfindlichen Oberfläche (3) durch einen Benutzer zu detektieren, das Sensorsignal von dem Abstandssensor (6) zu erhalten, einen ersten Istwert des Sensorsignals zu bestimmen und den ersten Zusammenhang abhängig von dem ersten Istwert zu korrigieren.

11. Benutzereingabevorrichtung (1) nach Anspruch 10,
**dadurch gekennzeichnet, dass**
die Auswerteeinheit (7) dazu eingerichtet ist, einen Schwellwert zu bestimmen, der gemäß dem korrigierten ersten Zusammenhang einer Änderung der Betätigungskraft entspricht, deren Wert gleich einem vorgegebenen Wert für die Minimalkraft ist und den Schwellwert auf der Speichereinheit zu speichern.

12. Benutzereingabevorrichtung (1) nach Anspruch 11,
**dadurch gekennzeichnet, dass**
die Auswerteeinheit (7) dazu eingerichtet ist,
- nach der Korrektur des ersten Zusammenhangs einen weiteren Istwert für das Sensorsignal zu bestimmen;
- eine Differenz zwischen dem ersten Istwert und dem weiteren Istwert mit dem gespeicherten Schwellwert zu vergleichen; und
- eine Betätigung der Benutzereingabevorrichtung (1) mittels der Auswerteeinheit (7) nur dann zu detektieren, wenn die Differenz zwischen dem ersten Istwert und dem weiteren Istwert größer ist als der Schwellwert.

13. Benutzereingabevorrichtung (1) nach Anspruch 12,
**dadurch gekennzeichnet, dass**
die Auswerteeinheit (7) dazu eingerichtet ist, die Betätigung der Benutzereingabevorrichtung (1) nur dann zu detektieren, wenn die Differenz zwischen dem ersten Istwert und dem weiteren Istwert größer ist, als der Schwellwert, während die Berührung der berührungsempfindlichen Oberfläche (3) detektiert wird.

14. Kraftfahrzeug mit einer Benutzereingabevorrichtung (1) nach einem der Ansprüche 10 bis 13.

## Claims

1. Method for calibrating a user input apparatus (1) for a motor vehicle, wherein
- the user input apparatus (1)
- has a component (2) having a touch-sensitive surface (3) and a reference element (4) mechanically connected to the component (2);
- has a circuit carrier (5) and a distance sensor (6), which is arranged on the circuit carrier (5) and is configured to generate a sensor signal depending on a distance of the reference element (4) from the distance sensor (6); and
- has an evaluation unit (7), which is configured to detect an actuation of the user input apparatus (1) when the touch-sensitive surface (3) is touched by a user and simultaneously an actuating force is exerted on the touch-sensitive surface (3) which is greater than or equal to a specifiable minimal force;
**characterized in that**
- in a first calibration step, a first relationship is determined between a change of the actuating force and a change of the sensor signal;
- the user input apparatus (1) is installed in the motor vehicle in an installation step after carrying out the first calibration step;
- in a second calibration step after carrying out the installation step, a first actual value of the sensor signal is determined and the first relationship is corrected depending on the first actual value;
- a first actuating force having a nonzero first force value is exerted on the touch-sensitive surface (3) and a first value of the sensor signal is determined during the exertion of the first actuating force;
- in each of a large number of iterations, a second actuating force having a nonzero second force value is exerted on the touch-sensitive surface (3) and a second value of the sensor signal is determined during the exertion of the second actuating force; and
- for each of the large number of iterations, the change of the sensor signal is determined as the difference between the first value and the second value of the sensor signal in order to determine the first relationship in the first calibration step.

2. Method for calibrating a user input apparatus (1) according to Claim 1,
**characterized in that**
the first actual value of the sensor signal is determined while no actuating force is exerted on the touch-sensitive surface (3).

3. Method for calibrating a user input apparatus (1) according to either of the preceding claims,
**characterized in that**
to determine the first actual value of the sensor signal, light (10a) is emitted in the direction of the reference element (4) by means of an emitter unit of the distance sensor (6) and portions (10b) of the light (10a) reflected by the reference element (4) are acquired by means of a detector unit of the distance sensor (6).

4. Method for calibrating a user input apparatus (1) according to any one of the preceding claims,
**characterized in that**
to correct the first relationship, a correction factor is determined depending on the first actual value of the sensor signal and the first relationship is multiplied by the correction factor.

5. Method for calibrating a user input apparatus (1) according to Claim 4,
**characterized in that**
the correction factor is determined based on a specified further relationship which assigns the correction factor to the first actual value.

6. Method for calibrating a user input apparatus (1) according to any one of the preceding claims, **characterized in that**
- the first relationship is determined at a first temperature value of an ambient temperature of the user input apparatus (1);
- in the first calibration step, a second relationship is determined between the change of the actuating force and the change of the sensor signal at a second temperature value of the ambient temperature;
- the first actual value is determined in the second calibration step at the first temperature value of the ambient temperature; and
- in the second calibration step, a second actual value of the sensor signal is determined at the second temperature value of the ambient temperature and the second relationship is corrected depending on the second actual value.

7. Method for calibrating a user input apparatus (1) according to any one of the preceding claims,
**characterized in that**
a threshold value is determined, which corresponds to a change of the actuating force according to the corrected first relationship, the value of which is equal to a specified value for the minimal force and the threshold value is stored on a storage unit of the user input apparatus (1).

8. Method for detecting an actuation of a user input apparatus (1) of a motor vehicle,
**characterized in that**
- a method for calibrating a user input apparatus (1) according to Claim 7 is carried out;
- after the correction of the first relationship, a further actual value for the sensor signal is determined;
- a difference between the first actual value and the further actual value is compared by means of the evaluation unit (7) to the stored threshold value; and
- the actuation of the user input apparatus (1) is only detected by means of the evaluation unit (7) if the difference between the first actual value and the further actual value is greater than the threshold value.

9. Method for detecting an actuation of a user input apparatus (1) according to Claim 8,
**characterized in that**
- a touch of the touch-sensitive surface (3) is detected by means of the evaluation unit (7); and
- the actuation of the user input apparatus (1) is only detected by means of the evaluation unit (7) if the difference between the first actual value and the further actual value is greater than the threshold value while the touch of the touch-sensitive surface (3) is detected.

10. User input apparatus (1) for a motor vehicle, comprising
- a component (2) having a touch-sensitive surface (3) and a reference element (4) mechanically connected to the component (2);
- a circuit carrier (5) and a distance sensor (6), which is arranged on the circuit carrier (5) and is configured to generate a sensor signal depending on a distance of the reference element (4) from the distance sensor (6);
- a storage unit, which stores a first relationship between a change of an actuating force exerted on the touch-sensitive surface (3) and a change of the sensor signal; and
- an evaluation unit (7), which is configured to carry out a method according to either of Claims 8 and 9 and to detect a touch of the touch-sensitive surface (3) by a user, to receive the sensor signal from the distance sensor (6), to determine a first actual value of the sensor signal, and to correct the first relationship depending on the first actual value.

11. User input apparatus (1) according to Claim 10,
**characterized in that**
the evaluation unit (7) is configured to determine a threshold value which corresponds to a change of the actuating force according to the corrected first relationship, the value of which is equal to a specified value for the minimal force, and to store the threshold value on the storage unit.

12. User input apparatus (1) according to Claim 11,
**characterized in that**
the evaluation unit (7) is configured
- to determine a further actual value for the sensor signal after the correction of the first relationship;
- to compare a difference between the first actual value and the further actual value to the stored threshold value; and
- to detect an actuation of the user input apparatus (1) by means of the evaluation unit (7) only if the difference between the first actual value and the further actual value is greater than the threshold value.

13. User input apparatus (1) according to Claim 12,
**characterized in that**
the evaluation unit (7) is configured to detect the actuation of the user input apparatus (1) only if the difference between the first actual value and the further actual value is greater than the threshold value while the touch of the touch-sensitive surface (3) is detected.

14. Motor vehicle having a user input apparatus (1) according to any one of Claims 10 to 13.

## Revendications

1. Procédé d'étalonnage d'un dispositif d'entrée utilisateur (1) pour un véhicule automobile,
- le dispositif d'entrée utilisateur (1)
- comprenant un composant (2) pourvu d'une surface tactile (3) et un élément de référence (4) relié mécaniquement au composant (2) ;
- comprenant un support de circuit (5) et un capteur de distance (6) qui est agencé sur le support de circuit (5) et qui est conçu pour générer un signal de capteur en fonction d'une distance entre l'élément de référence (4) et le capteur de distance (6) ; et
- comprenant une unité d'évaluation (7) qui est conçue de façon à détecter un actionnement du dispositif d'entrée utilisateur (1) lorsque la surface tactile (3) est touchée par un utilisateur et que, simultanément, une force d'actionnement supérieure ou égale à une force minimale prédéfinie est exercée sur la surface tactile (3) ;
**caractérisé en ce que**
- dans une première étape d'étalonnage, il est déterminé une première relation entre une modification de la force d'actionnement et une modification du signal du capteur ;
- le dispositif d'entrée utilisateur (1) est monté dans le véhicule après l'exécution de la première étape d'étalonnage ;
- dans une deuxième étape d'étalonnage, après l'étape de montage, une première valeur réelle du signal du capteur est déterminée et la première relation est corrigée en fonction de la première valeur réelle ;
- une première force d'actionnement d'une première valeur de force différente de zéro est exercée sur la surface tactile (3) et une première valeur du signal du capteur est déterminée pendant l'exercice de la première force d'actionnement ;
- dans une pluralité d'itérations, une deuxième force d'actionnement avec une deuxième valeur de force différente de zéro est exercée sur la surface tactile (3) et une deuxième valeur du signal du capteur est déterminée pendant l'exercice de la deuxième force d'actionnement ; et
- pour chaque itération de la pluralité d'itérations, la variation du signal du capteur est déterminée comme étant la différence entre la première valeur et la deuxième valeur du signal du capteur, afin de déterminer la première relation lors de la première étape d'étalonnage.

2. Procédé d'étalonnage d'un dispositif d'entrée utilisateur (1) selon la revendication 1,
**caractérisé en ce que**
la première valeur réelle du signal du capteur est déterminée alors qu'aucune force d'actionnement n'est exercée sur la surface tactile (3).

3. Procédé d'étalonnage d'un dispositif d'entrée utilisateur (1) selon l'une des revendications précédentes,
**caractérisé en ce que**
pour déterminer la première valeur réelle du signal du capteur, de la lumière (10a) est émise en direction de l'élément de référence (4) au moyen d'une unité émettrice du capteur de distance (6), et des parties (10b) de la lumière (10a) réfléchies par l'élément de référence (4) sont détectées au moyen d'une unité de détection du capteur de distance (6).

4. Procédé d'étalonnage d'un dispositif d'entrée utilisateur (1) selon l'une des revendications précédentes,
**caractérisé en ce que**
pour corriger la première relation, un facteur de correction est déterminé en fonction de la première valeur réelle du signal du capteur et la première relation est multipliée par le facteur de correction.

5. Procédé d'étalonnage d'un dispositif d'entrée utilisateur (1) selon la revendication 4,
**caractérisé en ce que**
le facteur de correction est déterminé sur la base d'une autre relation prédéfinie, qui associe le facteur de correction à la première valeur réelle.

6. Procédé d'étalonnage d'un dispositif d'entrée utilisateur (1) selon l'une des revendications précédentes,
**caractérisé en ce que**
- la première relation est déterminée pour une première valeur de température ambiante du dispositif d'entrée utilisateur (1) ;
- dans la première étape d'étalonnage, une deuxième relation est déterminée entre la modification de la force d'actionnement et la modification du signal du capteur pour une deuxième valeur de température ambiante ;
- la première valeur réelle est déterminée lors de la deuxième étape de calibrage à la première valeur de température de la température ambiante ; et
- une deuxième valeur réelle du signal du capteur est déterminée lors de la deuxième étape de calibrage à la deuxième valeur de température de la température ambiante et la deuxième relation est corrigée en fonction de la deuxième valeur réelle.

7. Procédé d'étalonnage d'un dispositif d'entrée utilisateur (1) selon l'une des revendications précédentes,
**caractérisé en ce que**
une valeur seuil est déterminée, qui correspond à une modification de la force d'actionnement selon la première relation corrigée, dont la valeur est égale à une valeur prédéfinie pour la force minimale, et la valeur seuil est enregistrée sur une unité de mémoire du dispositif d'entrée utilisateur (1).

8. Procédé de détection d'un actionnement d'un dispositif d'entrée utilisateur (1) d'un véhicule automobile,
**caractérisé en ce que**
- un procédé d'étalonnage d'un dispositif d'entrée utilisateur (1) selon la revendication 7 est mis en œuvre ;
- après correction de la première relation, une autre valeur réelle est déterminée pour le signal du capteur ;
- une différence entre la première valeur réelle et ladite autre valeur réelle est comparée à la valeur seuil mémorisée au moyen de l'unité d'évaluation (7) ; et
- l'actionnement du dispositif d'entrée utilisateur (1) n'est détecté au moyen de l'unité d'évaluation (7) que si la différence entre la première valeur réelle et la valeur réelle supplémentaire est supérieure à la valeur seuil.

9. Procédé de détection d'un actionnement d'un dispositif d'entrée utilisateur (1) selon la revendication 8,
**caractérisé en ce que**
- un contact avec la surface tactile (3) est détecté au moyen de l'unité d'évaluation (7) ; et
- l'actionnement du dispositif d'entrée utilisateur (1) n'est détecté par l'unité d'évaluation (7) que si la différence entre la première valeur réelle et ladite autre valeur réelle est supérieure à la valeur seuil, tandis que le contact avec la surface tactile (3) est détecté.

10. Dispositif d'entrée utilisateur (1) pour un véhicule automobile, comprenant
- un composant (2), qui présente une surface tactile (3), et un élément de référence (4) relié mécaniquement au composant (2) ;
- un support de circuit (5) et un capteur de distance (6) qui est agencé sur le support de circuit (5) et qui est conçu pour générer un signal de capteur en fonction d'une distance entre l'élément de référence (4) et le capteur de distance (6) ;
- une unité à mémoire qui enregistre une première relation entre une modification d'une force d'actionnement exercée sur la surface tactile (3) et une modification du signal du capteur ; et
- une unité d'évaluation (7), qui est conçue pour mettre en œuvre un procédé selon l'une des revendications 8 ou 9 et pour détecter un contact de la surface tactile (3) par un utilisateur, pour recevoir le signal de capteur du capteur de distance (6), afin de déterminer une première valeur réelle du signal de capteur et de corriger la première relation en fonction de la première valeur réelle.

11. Dispositif d'entrée utilisateur (1) selon la revendication 10,
**caractérisé en ce que**
l'unité d'évaluation (7) est conçue pour déterminer une valeur seuil qui, selon la première relation corrigée, correspond à une modification de la force d'actionnement dont la valeur est égale à une valeur prédéfinie pour la force minimale, et pour enregistrer la valeur seuil sur l'unité de mémoire.

12. Dispositif d'entrée utilisateur (1) selon la revendication 11,
**caractérisé en ce que**
l'unité d'évaluation (7) est conçue de manière à
- déterminer une autre valeur réelle pour le signal du capteur après la correction de la première relation ;
- comparer à la valeur seuil mémorisée une différence entre la première valeur réelle et ladite autre valeur réelle ; et
- ne détecter une activation du dispositif d'entrée utilisateur (1) au moyen de l'unité d'évaluation (7) que si la différence entre la première valeur réelle et ladite autre valeur réelle est supérieure à la valeur seuil.

13. Dispositif d'entrée utilisateur (1) selon la revendication 12,
**caractérisé en ce que**
l'unité d'évaluation (7) est conçue de manière à ne détecter l'actionnement du dispositif d'entrée utilisateur (1) que si la différence entre la première valeur réelle et ladite autre valeur réelle est supérieure à la valeur seuil, pendant que le contact avec la surface tactile (3) est détecté.

14. Véhicule automobile avec un dispositif d'entrée utilisateur (1) selon l'une des revendications 10 à 13**.**
